## Europäisches Patentamt
## European Patent Office
## Office européen des brevets

(19)

(11) Publication number: **0 017 403**
**B1**

(12) **EUROPEAN PATENT SPECIFICATION**

(45) Date of publication of patent specification: **13.06.84**

(51) Int. Cl.³: **H 02 P 5/40**

(21) Application number: **80300880.4**

(22) Date of filing: **21.03.80**

(54) **A method of, and apparatus for, operating an induction motor.**

(30) Priority: **22.03.79 JP 32379/79**

(43) Date of publication of application:
**15.10.80 Bulletin 80/21**

(45) Publication of the grant of the patent:
**13.06.84 Bulletin 84/24**

(84) Designated Contracting States:
**DE FR GB**

(56) References cited:
**FR - A - 1 495 544**
**FR - A - 2 091 903**
**GB - A - 972 132**
**US - A - 3 171 075**
**US - A - 3 571 681**

(73) Proprietor: **FANUC LTD**
**5-1, Asahigaoka 3-chome Hino-shi**
**Tokyo 191 (JP)**

(72) Inventor: **Kawada, Shigeki**
**346-15, Oaza-Shimoda Hino-shi**
**Tokyo (JP)**
Inventor: **Ishida, Hiroshi**
**2-73, Matsubara-Cho, 2-Chome Hamura-Machi**
**Nishitama-gun Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of, and apparatus for, operating an induction motor.

When the table of a machine tool carries a workpiece to a prescribed position, there are instances where this movement must be effected at a high speed. It is also required that the table be moved slowly at times, as when the workpiece is subjected to a slow machining operation. Hence the motor which is connected to the feed shaft that moves the table ordinarily has to be capable of having its speed controlled over a very wide range, for example from 400 r.p.m. to an extremely slow speed on the order of 0.1 r.p.m. DC motors are well suited for connecting to such feed shafts, insofar as they are capable of offering such a wide range of speed control and are therefore employed to drive feed shafts in machine tools. It has become possible to vary the speed of an induction motor over a broad range through the utilization of variable frequency control systems, and induction motors, which are easy to inspect and maintain, are now finding use in such applications as spindle drive motors for machine tools. However, it is not possible for an induction motor to run stably at as low a speed as a few r.p.m. or less through the use of a control system that merely reduces the operating frequency. The reason for this is as follows. The magnitude of a rotating magnetic flux which is linked to the secondary conductor of an induction motor is proportional to a voltage derived by subtracting a voltage drop, which is due to primary resistance and primary leakage reactance, from a terminal voltage applied to the primary winding of the motor. This terminal voltage becomes small at extremely low frequencies but, since voltage drop in the above-mentioned resistance and leakage reactance remains substantially constant irrespective of frequency, there is an increase in the disparity between the magnitude of the rotating magnetic flux and the terminal voltage as frequency assumes very small values. Difficulties are encountered in controlling and accurately detecting the rotating magnetic flux and the secondary current which it induces in the secondary conductor. In other words, smooth and stable speed control cannot be achieved where there are fluctuations in load torque. Further, while it might be possible to conceive of an arrangement in which a prescribed torque could be produced by sending a large current into the primary side of the induction motor when rotating the motor at a low speed of only a few r.p.m., the magnetic circuit of the induction motor would saturate and this would prevent the production of the desired torque. These and other problems raise doubts about the expediency of using a control system which merely reduces operating frequency to provide effective low speed control.

In view of the foregoing it has not been possible to employ an induction motor in the driving of a machine tool table when the motor may be required to turn through one revolution over a period of several minutes. Accordingly, replacement of all of the conventional motors used in machine tools with readily maintained and inspected squirrel-cage induction motors has not been possible, and the partial use of DC motors has been unavoidable.

GB—A—972 132 is concerned with the problem of preventing undesired changes in the relative phases of the voltages applied to a three-phase synchronous motor. The output of a fixed frequency oscillator is fed directly to a first modulator circuit and through respective phase-shifting networks to second and third modulator circuits. All three modulator circuits are fed with the output signal from a variable-frequency oscillator the frequency of which is controlled by a controlling direct voltage signal. The outputs of the modulators contain components having a frequency equal to the difference between the instantaneous frequency of the variable-frequency oscillator and the fixed frequency oscillator. These outputs differ in phase by 120° and this phase difference will remain constant despite variations in the frequency of the variable-frequency oscillator 3.

FR—A—2 091 903 is concerned with motor speed control using polyphase voltages of variable frequency. A binary counter receives command pulses dependent upon a desired motor speed. Digital information held in the binary counter determines digital sine and cosine values which are then converted to analog values representing voltage which are amplified and applied to stator windings of a two-phase asynchronous motor. The amplified voltages are of a frequency dependent upon the information held in the binary counter and thus upon the command pulses.

According to one aspect of the present invention there is provided a method of operating an N-phase induction motor at low speed in dependence upon a speed deviation signal representative of difference between a command speed and actual speed of the motor, characterised by:

generating N sinusoidal signals, of N different phases, of a frequency and amplitude proportional to the value of the speed deviation signal,

generating a carrier wave of constant frequency and amplitude,

amplitude modulating the N sinusoidal signals onto the carrier wave, to produce N modulated signals,

applying the No modulated signals to respective stator windings of the motor, to energise those stator windings.

According to another aspect of the present invention there is provided apparatus for operating an N-phase induction motor at low speed in dependence upon a speed deviation signal representative of difference between a command speed and actual speed of the motor, characterised by:

an arithmetic unit for generating N sinusoidal signals, of N different phases, of a frequency and amplitude dependent upon the value of the speed deviation signal,
a carrier wave generator for generating a carrier wave of constant frequency and amplitude,
modulating means operable to amplitude modulate the N sinusoidal signals onto the carrier wave to produce N modulated signals, and
means for applying the N modulated signals to respective stator windings of the motor, to energise those stator windings.

The invention makes it possible to operate an induction motor smoothly and stably at low speeds while producing a prescribed torque.

Embodiments of this invention can provide for variable speed operating systems that are capable of rotating induction motors at a very low speed.

Further, embodiments of this invention can provide for variable speed operating systems that are capable of rotating induction motor stably in regions of very low speeds.

Moreover, embodiments of this invention can provide for variable speed operating systems that are capable of rotating induction motor stably while producing prescribed torques in regions of very low speeds.

Reference will now be made, by way of example, to the accompanying drawings, in which:—

Fig. 1 is a block diagram of a two-phase induction motor drive apparatus embodying the present invention;

Fig. 2 is a waveform diagram illustrating signals associated with respective parts of the two-phase induction motor drive apparatus shown in Fig. 1;

Figs. 3A and 3B are respective vector diagrams of magnetomotive force for assistance in explanation of the operation of a two phase induction motor under control of apparatus embodying this invention; and

Figs. 4A to 4F are vector diagrams of magnetomotive force for assistance in explanation of the operation of a two phase induction motor under control of apparatus embodying this invention.

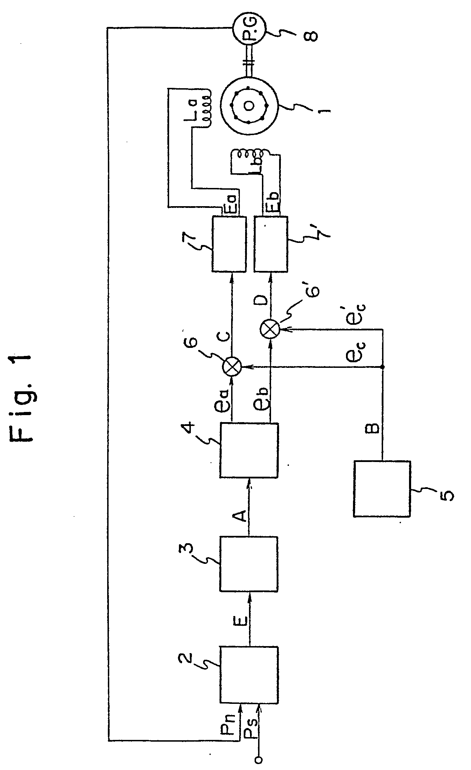

Illustrated in Fig. 1 is a block diagram of a two-phase induction motor driven by drive apparatus embodying the present invention. The arrangement of Fig. 1 includes a two-phase induction motor 1 having stator windings $L_a$, $L_b$; an error register 2 comprising means such as a reversible counter for computing the difference between two input pulse trains $P_s$ and $P_n$, where the pulse train $P_s$ serves as a speed command signal, and is supplied from outside the circuitry shown in the Figure, whilst the pulse train $P_n$ is indicative of actual motor speed and is the output of a pulse generator 8 coupled directly to the induction motor 1; a digital-to-analog (D—A) converter 3 for converting error pulses from error register 2 into an analog speed deviation signal which will be understood to represent the difference between command speed and the actual motor speed, and an arithmetic unit 4 for producing two-phase sinusoidal waves $e_a$, $e_b$ that are displaced from each other by 90 degrees, the frequency and peak value of the sinusoidal waves $e_a$, $e_b$ varying in proportion to the voltage level of the analog signal obtained from D—A converter 3. In the present embodiment the arithmetic unit 4 produces two-phase output signals in order to operate the two-phase induction motor 1, but the unit can be adapted to produce N-phase signals in a situation where an N-phase induction motor is to be driven. The arrangement of Fig. 1 further includes a carrier wave generator 5 for generating a sinusoidal signal B having a constant amplitude as well as a constant frequency, such as 50H_z, which is high in comparison with the frequency of the two-phase sinusoidal waves $e_a$, $e_b$; multipliers 6, 6' for multiplying together the two-phase sinusoidal waves $e_a$, $e_b$ obtained from arithmetic unit 4, and carrier waves $e_c$, $e_c'$ of identical phase obtained from carrier wave generator 5, thereby to produce output signals C, D which are the carrier waves $e_c$, $e_c'$ as modulated by the sinusoidal waves $e_a$, $e_b$; and power amplifiers 7, 7' which amplify the outputs C, D of respective multipliers 6, 6' and then apply the amplified signals to stator windings $L_a$, $L_b$ as voltages $E_a$, $E_b$.

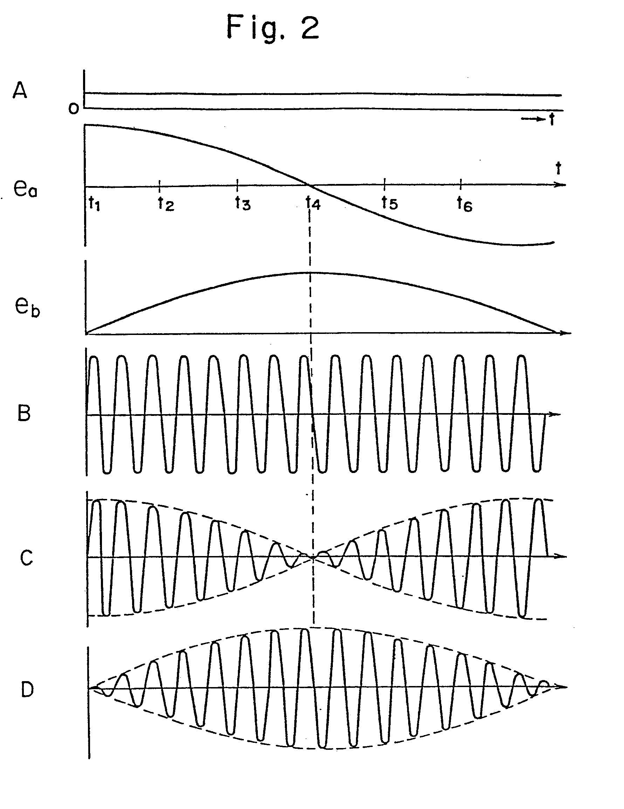

In terms of operation, the error register 2 receives at one of its input terminals the speed command pulse train $P_s$ of a prescribed frequency which is determined in accordance with a desired motor speed. The error register receives at its other input terminal the pulse train $P_n$ indicative of actual motor speed and subtracts the number of pulses in this train from those in the pulse train $P_s$ to provide an error signal E which is indicative of the difference. The D—A converter 3 converts the digital error signal E into an analog error voltage or speed deviation signal A the level of which corresponds to the error signal E. The form of signal A can be understood from Fig. 2. The arithmetic unit 4 accepts the error voltage or speed deviation signal A and generates a pair of sinusoidal signals $e_a$, $e_b$, as shown in Fig. 2, which differ in phase by 90 degrees and have a frequency and amplitude that depend upon the size of the error voltage. Meanwhile the carrier wave generator 5 produces the carrier wave B whose frequency and amplitude are constant, as depicted in Fig. 2, the carrier wave being applied to multipliers 6, 6' as respective carrier waves $e_c$, $e_c'$ of identical phase. The multipliers 6, 6' multiply the carrier waves $e_c$, $e_c'$ and arith-

metic unit outputs $e_a$, $e_b$ thereby to modulate the carrier waves $e_c$ and $e_c'$ by the sinusoidal signals $e_a$, $e_b$ respectively and thus produce the modulated outputs C, D shown in Fig. 2. These outputs C, D are then amplified by the power amplifiers 7, 7' into signals $E_a$, $E_b$ that are supplied to respective stator windings $L_a$, $L_b$ of two-phase induction motor 1. The induction motor responds in such a manner that an induced voltage appears in a secondary conductor owing to an alternation in flux attributed to the carrier wave frequency, the induced voltage giving rise to a secondary current that is large enough to generate a torque. In addition, the field established by the stator winding currents revolves as the sinusoidal outputs $e_a$, $e_b$ of arithmetic unit 4 vary in phase, thereby producing a rotating field. What is of special note here is that the frequency of the sinusoidal signals $e_a$, $e_b$, namely the synchronous speed of the motor, must not be allowed to exceed a value which is half that of the carrier wave frequency. Moreover, a change in the speed of induction motor 1 is effected by changing the frequency of the speed command pulse train $P_s$.

A prescribed speed and torque are established when the modulated, very low frequency outputs C, D are impressed upon the induction motor 1. The principle which accounts for this may be explained as follows.

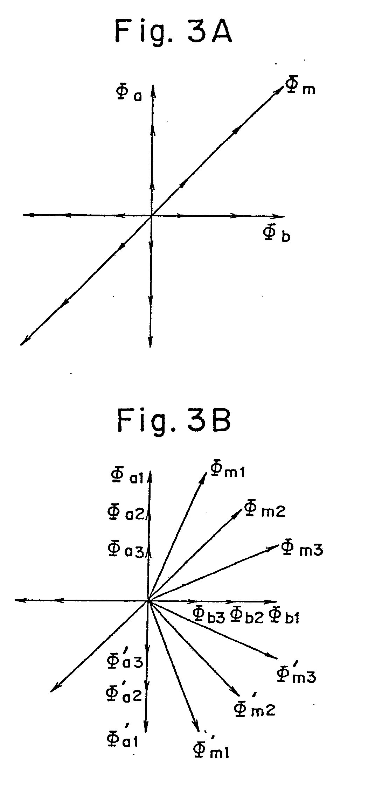

Two-phase induction motor 1 cannot operate at very low speeds, for the reasons set forth above, when the stator windings $L_a$, $L_b$ receive solely the signals $e_a$, $e_b$ having a frequency and amplitude which depend upon the error voltage at the output of error register 2. Furthermore, assume now that only the constant frequency and constant amplitude carrier wave output of carrier wave generator 5 is applied to the respective induction motor stator windings $L_a$, $L_b$ after having been split into the two portions $e_c$, $e_c'$ of identical phase. This will give rise to a magnetomotive force $\Phi_a$ resulting from $E_a$ and a magnetomotive force $\Phi_b$ resulting from $E_b$, and the magnetomotove forces will be of the same magnitude (that is, $\Phi_a = \Phi_b$) because $E_a$ and $E_b$ are identical in magnitude as well as phase. Accordingly, as shown in Fig. 3A, the resultant magnetomotive force $\Phi_m$ between $\Phi_a$ and $\Phi_b$ merely alternates at a slope of 45 degrees, that is, at an angle of 45 degrees with respect to both $\Phi_a$ and $\Phi_b$. Such a condition cannot produce a rotating field. Thus, merely applying the carrier wave to the stator windings $L_a$, $L_b$ will not cause the induction motor to rotate. However, if the voltages $E_a$, $E_b$ applied to the stator windings $L_a$, $L_b$ can be made to undergo a slight progressive or step-by-step variation, a corresponding variation will occur in the magnitudes of the magnetomotive forces $\Phi_a$, $\Phi_b$, and the resultant magnetomotive force $\Phi_m$ will rotate slowly, as depicted in Fig. 3B which illustrates sucessive step-by-step values

$\Phi_{a1}$ to $\Phi_{a3}$, and $\Phi_{b1}$ to $\Phi_{b3}$ for example, of magnetomotive force produced by successive values of $E_a$, $E_b$ applied to the stator windings to generate a rotating resultant magnetomotive force, $\Phi_{m1}$, $\Phi_{m2}$, $\Phi_{m3}$ for example. More specifically, a rotating magnetic field is generated by applying a component that yields a turning effort, attributed to the outputs $e_a$, $e_b$ of arithmetic unit 4, to the carrier wave component which is incapable of producing such turning effort, while the carrier wave component results in an induced voltage large enough to cause a secondary current to flow in the secondary conductor. It is this feature that allows the rotor to rotate smoothly even at very low speeds.

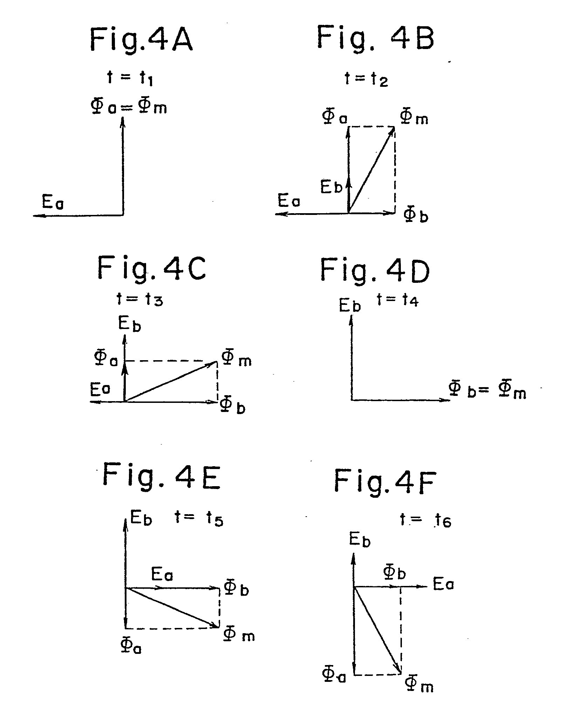

The operation of the two-phase induction motor drive circuit can be more fully understood from Figs. 4A to 4F which give an analysis of such operation with the passage of time and in terms of the rotating field. The various times $t_1$, $t_2$, $t_3 \ldots t_5$, $t_6$ shown in Fig. 4 correspond to the points in time similarly labelled along the time axis of the respective signal waveforms in Fig. 2. In other words Fig. 4A to 4F illustrate the conditions under which the rotating field is produced. Thus Fig. 4A shows that only the modulated output voltage $E_a$ is present at time $t = t_1$, with output voltage $E_b$ being 90 degrees out of phase and having a magnitude of zero, so that the magnetomotive force $\Phi_a$, which is attributed entirely to $E_a$, is the total magnetomotive force, i.e., $\Phi_a = \Phi_m$. Fig. 4B shows an instance where $E_a{:}E_b = \sqrt{3}{:}1$ at time $t = t_2$, so that both the output voltages $E_a$, $E_b$ now contribute to the resultant magnetomotive force $\Phi_m$ between the magnetomotive forces $\Phi_a$, $\Phi_b$, with $\Phi_b$ being attributed to $E_b$. The vector of the resultant magnetomotive force $\Phi_m$ has thus rotated through 30 degrees between times $t_1$ and $t_2$. Fig. 4C illustrates an instance where $E_a{:}E_b = 1{:}\sqrt{3}$ at time $t = t_3$, with the vector of the resultant magnetomotive force $\Phi_m$ having rotated through an additional 30 degrees. Fig. 4D shows that only the output voltage $E_b$ is present at time $t = t_4$, with output voltage $E_a$ being 90 degrees out of phase and having a magnitude of zero, so that the magnetomotive force $\Phi_b$ is the total magnetomotive force, i.e., $\Phi_b = \Phi_m$. Here $\Phi_m$ has rotated by an additional 30 degrees for a total of 90 degrees in comparison with its orientation at time $t = t_1$. Fig. 4E shows the condition at time $t = t_5$ and Fig. 4F at time $t = t_6$. It can be seen that the vector of the output voltage $E_a$ has reversed direction as compared with $t = t_1$ and $t = t_2$, and that this is accompanied by a reversal in the direction of the magnetomotive force vector $\Phi_a$. The resultant magnetomotive force vector can thus be understood to continue rotating successively by 30 degree steps without altering direction. Thus the magnetomotive forces attributed to the respective output voltages $E_a$, $E_b$ also rotate smoothly owing to the mutual changes in magnitudes and directions of the $E_a$ and $E_b$ vectors. The two-phase induction motor can therefore run stably at a very low speed while generating a prescribed torque.

While the embodiment of the present invention which has been described and illustrated concerns a simple two-phase induction motor in order to facilitate description, it is no way limited to such an arrangement but can obviously be applied to induction motor that operate on three or more phases. In such a case the arithmetic unit 4 would be required to generaze N-phase output signals of a phase angle $2\pi/N$, and the number of multipliers and power amplifiers would have to agree with the number of phases N. It should be understood that the feedback system in the circuitry of Fig. 1 may employ analog signals instead of the digital signals.

It has thus been shown that the present invention makes it possible to operate a durable, maintenance-free squirrel-cage induction motor smoothly and stably while producing a prescribed torque, as in the case of a DC motor, even at a very low speed of at most several r.p.m. or less. The economic advantages of this are self-evident. The application of this operating system enables a squirrel-cage induction motor to be employed as a feed shaft drive motor in machine tools.

Thus, embodiments of the present invention provide a system for operating an induction motor at variable speeds, which is particularly effective when an induction motor is to rotate at a very low speed of at most several r.p.m. or less. The system produces polyphase sinusoidal signals of a frequency which corresponds to the difference between a command speed and the actual speed of the induction motor, the number of phases of the sinusoidal signals being equal to the number of phases at which the induction motor operates, and also produces a sinusoidal carrier wave having a constant frequency in the range from $50H_z$ to $400H_z$ for example and a constant amplitude, and polyphase induction motor drive signals are formed by modulating the carrier wave by the polyphase sinusoidal signals. The induction motor drive signals are amplified up to a desired value for application to the induction motor to energise the stator for each respective input phase so that the rotor of the induction motor can be caused to rotate at a very low speed.

**Claims**

1. A method of operating an N-phase induction motor at low speed in dependence upon a speed deviation signal representative of difference between a command speed and actual speed of the motor, characterised by:

generating N sinusoidal signals, of N different phases, of a frequency and amplitude proportional to the value of the speed deviation signal,

generating a carrier wave of constant frequency and amplitude,

amplitude modulating the N sinusoidal signals onto the carrier wave, to produce N modulated signals,

applying the N modulated signals to respective stator windings of the motor, to energise those stator windings.

2. A method as claimed in claim 1, wherein the amplitude modulation is effected by multipliers.

3. A method as claimed in claim 1 or 2, wherein N is equal to two and the two sinusoidal signals differ in phase by $\pi/2$.

4. A method as claimed in claim 1 or 2, where N is greater than or equal to three and the sinusoidal signals differ in phase, from one to the next nearest in phase, by $2\pi/N$.

5. Apparatus for operating an N-phase induction motor (1) at low speed in dependence upon a speed deviation signal (A) representative of difference between a command speed and actual speed of the motor, characterised by:

an arithmetic unit (4) for generating N sinusoidal signals ($e_a$, $e_b$) of N different phases, of a frequency and amplitude dependent upon the value of the speed deviation signal (A).

a carrier wave generator (5) for generating a carrier wave of constant frequency and amplitude,

modulating means (6, 6') operable to amplitude modulate the N sinusoidal signals onto the carrier wave to produce N modulated signals (C, D), and

means (7, 7') for applying the N modulated signals to respective stator windings ($L_a$, $L_b$) of the motor, to energise those stator windings.

6. Apparatus as claimed in claim 5, wherein the modulating means comprises multipliers (6, 6').

7. Apparatus as claimed in claim 5 or 6, wherein N is equal to two, and the unit (4) for generating the two sinusoidal signal generates signals differing in phase by $\pi/2$.

8. Apparatus as claimed in claim 5 or 6, wherein N is greater than or equal to three, and the unit for generating the N sinusoidal signals generates signals differing in phase, from one to the next nearest in phase, by $2\pi/N$.

9. Apparatus as claimed in claim 5, 6, 7 or 8, in combination with an N-phase induction motor operated thereby.

10. Apparatus as claimed in claim 9, wherein the N-phase induction motor is a motor of a machine tool for driving a workpiece table.

11. A machine tool including apparatus as claimed in claim 9 or 10.

**Patentansprüche**

1. Verfahren zum Betrieb eines N-Phasen-Induktionsmotors bei einer niedrigen Drehzahl in Abhängigkeit von einem Drehzahlabweichungssignal, das repräsentativ für eine Differenz zwischen einer Befehlsdrehzahl und einer Istdrehzahl ist, dadurch gekennzeichnet, daß N sinusförmige Signale erzeugt werden, die N verschiedene Phasen und eine Frequenz und eine Amplitude, die proportional zu dem Wert des Drehzahlabweichungssignals sind, haben, daß eine Trägerwelle einer konstanten Frequenz und Amplitude erzeugt wird, daß die Trägerwelle mittels der N sinusfömigen Signale amplitudenmoduliert wird, um N modulierte Signale zu erzeugen, und daß die N modulierten Signale den betreffenden Statorwicklungen des N-Phasen-Induktionsmotors zugefürt werden, um diese Statorwicklungen zu erregen.

2. Verfahren nach Anspruch 1, dadurch gekennzeichnet, daß die Amplitudedenmodulation durch Multiplizierer bewirkt wird.

3. Verfahren nack Anspruch 1 oder 2, dadurch gekennzeichnet, daß N gleich 2 ist und daß sich die zwei sinusförmigen Signale in ihrer Phase um $\pi/2$ unterscheiden.

4. Verfahren nach Anspruch 1 oder 2, dadurch gekennzeichnet, daß N größer oder gleich 3 ist und daß sich die sinusförmigen Signale in ihrer Phase von einer bis zu der nächstliegenden Phase um $2\pi/N$ unterscheiden.

5. Einrichtung zum Betrieb eines N-Phasen-Induktionsmotors (1) bei einer niedrigen Drehzahl in Abhängigkeit von einem Drehzahlabweichungssignal (A), das repräsentativ für die Differenz zwischen einer Befehlsdrehzahl und der Istdrehzahl des N-Phasen-Induktionsmotors ist, dadurch gekennzeichnet, daß eine arithmetische Einheit (4) zum Erzeugen sinusförmiger Signale ($\theta_a$, $\theta_b$) mit N unterschiedlichen Phasen und einer Frequenz und einer Amplitude, die abhängig von dem Wert des Drehzahlabweichungssignal (A) sind, vorgesehen ist, daß ein Trägerwellengenerator (5) zum Erzeugen einer Trägerwelle einer konstanten Frequenz und Amplitude vorgesehen ist, daß Modulationsmittel (6, 6') vorgesehen sind, die wirksam sind, um eine Amplitudenmodulation der Trägerwelle mittels der N sinusförmigen Signale durchzuführen, um so N modulierte Signale (C, D) zu erzeugen, und daß Mittel (7, 7') zum Liefern der N modulierten Signale an die jeweils betreffende Statorwicklung ($L_a$, $L_b$) des N-Phasen-Induktionsmotors, um diese Statorwicklungen zu erregen, vorgesehen sind.

6. Einrichtung nach Anspruch 5 dadurch, gekennzeichnet, daß die Modulationsmittel aus Multiplizierern (6, 6') bestehen.

7. Einrichtung nach Anspruch 5 oder 6, dadurch gekennzeichnet, daß N gleich 2 ist und daß die Einheit (4) zum Erzeugen der zwei sinusförmigen Signale Signale erzeugt, die sich in ihrer Phase um $\pi/2$ unterscheiden.

8. Einrichtung nach Anspruch 5 oder 6, dadurch gekennzeichnet, daß N gröber oder gleich 3 ist und daß die Einheit zum Erzeugen der N sinusförmigen Signale Signale erzeugt, die sich in ihrer Phase von der einen zu der nächstliegenden um $2\pi/N$ unterscheiden.

9. Einrichtung nach Anspruch 5, 6, 7 oder 8, dadurch gekennzeichnet, daß sie mit einem N-Phasen-Induktionsmotor zusammenarbeitet, der durch sie betrieben wird.

10. Einrichtung nach Anspruch 9, dadurch gekennzeichnet, daß de N-phasen-Induktionsmotor ein Motor einer Werkzeugmaschine zum Antreiben eines Werkstücktisches ist.

11. Werkzeugmaschine, dadurch gekennzeichnet, daß sie die Einrichtung nach Anspruch 9 oder 10 enthält.

## Revendications

1. Procédé de fonctionnement à petite vitesse d'un moteur à induction à N phases sous la dépendance d'un signal d'écart de vitesse représentatif de la différence entre une vitesse de consigne et la vitesse effective du moteur, caractérisé en ce que:

— on engendre N signaux sinusoïdaux de N phases différentes, d'une fréquence et d'une amplitude proportionnelles à la valeur du signal d'écart de vitesse,

— on engendre une onde porteuse de fréquence et d'amplitude constantes,

— on module l'amplitude de l'onde porteuse avec les N sigaux sinusoïdaux pour engendrer N signaux modulés,

— on applique les N signaux modulés à des enroulements de stator respectifs du moteur pour exciter ces enroulements de stator.

2. Procédé selon la revendication 1, dans lequel la modulation d'amplitude est effectuée par des multiplicateurs.

3. Procédé selon l'une des revendications 1 et 2, dans lequel N est égal à deux et les deux signaux sinusoïdaux diffèrent de phase de $\pi/2$.

4. Procédé selon l'une des revendications 1 et 2, dans lequel N est supérieur ou égal à trois et les signaux sinusoïdaux diffèrent de phase de $2\pi/N$, de l'un au plus proche en phase.

5. Dispositif pour le fonctionnement à petite vitesse d'un moteur à induction (1) à N phases sous la dépendance d'un signal d'écart de vitesse (A) représentatif de la différence entre une vitesse de consigne et la vitesse effective du moteur, caractérisé par:

— une unité arithmétique (4) servant à engendrer N signaux sinusoïdaux ($e_a$, $e_b$) de N phases différentes, d'une fréquence et d'une amplitude qui dépendent de la valeur du signal d'écart de vitesse (A),

— un générateur d'onde porteuse (5) servant à engendrer une onde porteuse de fréquence et d'amplitude constantes,

— des moyens de modulation (6, 6') capables de moduler l'amplitude de l'onde porteuse avec les N signaux sinusoïdaux pour engendrer N signaux modulés (C, D), et
— des moyens (7, 7') permettant d'appliquer les N signaux modulés aux enroulements de stator respectifs (La, Lb) du moteur pour exciter ces enroulements de stator.

6. Dispositif selon la revendication 5, dans lequel les moyens de modulation comprennent des multiplicateurs (6, 6').

7. Dispositif selon l'une des revendications 5 ou 6, dans lequel N est égal à deux et l'unité (4) servant à engendrer les deux signaux sinusoïdaux engendre des signaux qui diffèrent en phase de $\pi/2$.

8. Dispositif selon l'une des revendications 5 ou 6, dans lequel N est supérieur ou égal à trois et l'unité servant à engendrer les N signaux sinusoïdaux engendre des signaux qui diffèrent de phase de $2\pi/N$, de l'un au plus proche en phase.

9. Dispositif selon l'une des revendications 5, 6, 7 ou 8, en combinaison avec un moteur à induction à N phases actionné par ce dispositif.

10. Dispositif selon la revendication 9, dans lequel le moteur à induction à N phases est un moteur de machine-outil servant à entraîner une table porte-pièce.

11. Machine-outil comprenant un dispositif selon l'une des revendications 9 et 10.

Fig. 1

0 017 403

# Fig. 2

# Fig. 3A

# Fig. 3B

Fig.4A

Fig. 4B

Fig.4C

Fig.4D

Fig.4E

Fig.4F